(19) Europäisches Patentamt

European Patent Office

Office européen des brevets

(11) **EP 0 612 976 B1**

(12) **EUROPÄISCHE PATENTSCHRIFT**

(45) Veröffentlichungstag und Bekanntmachung des Hinweises auf die Patenterteilung:
**29.01.1997 Patentblatt 1997/05**

(51) Int Cl.6: **G01B 9/02**, G01J 9/02

(21) Anmeldenummer: **93119046.6**

(22) Anmeldetag: **25.11.1993**

(54) **Phasenmoduliertes Interferometer**

Phase modulated interferometer

Interféromètre à modulation de phase

(84) Benannte Vertragsstaaten:
**AT CH DE FR GB IT LI**

(30) Priorität: **23.02.1993 DE 4305458**

(43) Veröffentlichungstag der Anmeldung:
**31.08.1994 Patentblatt 1994/35**

(73) Patentinhaber: **JENOPTIK Aktiengesellschaft**
**D-07743 Jena (DE)**

(72) Erfinder:
• **Dammann, Ehrhard**
**D-07743 Jena (DE)**

• **Bauer, Jürgen**
**D-07745 Jena (DE)**

(74) Vertreter: **Geyer, Werner, Dr.-Ing. et al**
**Patentanwälte**
**GEYER & FEHNERS**
**Perhamerstrasse 31**
**80687 München (DE)**

(56) Entgegenhaltungen:
**EP-A- 0 290 789**      **EP-A- 0 444 843**
**EP-A- 0 448 751**      **US-A- 3 563 664**

## Beschreibung

Die Erfindung betrifft ein phasenmoduliertes Interferometer zur Auswertung von Phasenverschiebungen aufgrund von Änderungen optischer Weglängen im Meßarm des Interferometers. Insbesondere findet sie Anwendung für Präzisionslängenmeßsysteme, die vorzugsweise das Heterodynverfahren zur Auswertung verwenden.

Präzisionslängenmeßsysteme, basierend auf Interferometern, sind seit Einführung des Lasers bekannt. Prinzipiell wird zwischen homodynen und heterodynen Auswerteverfahren unterschieden. Heterodynverfahren werden im allgemeinen bevorzugt aufgrund ihrer Möglichkeit des Vor- und Rückwärtszählens und der infolge verschwindenden Gleichlichtanteils hohen Interpolation. Derzeit wird ausschließlich die Einseitenbanddetektion zur Auswertung genutzt. Zur Erzeugung eines Seitenbandes bzw. zur räumlichen Trennung der Seitenbänder werden Zeemann-Aufspaltung oder Braggablenkung genutzt. Bei integrierten optischen Heterodyninterferometern kann neben der Strahlteilung und -rekombination auch eine Frequenz- oder Phasenmodulation vorgenommen werden. Wegen der Stabilität und der aufwendigen Abbildung von monomodigen Streifenwellenleitern auf Schichtwellenleitern und umgekehrt mit Hilfe von Tapern, Linsen oder Gittern werden Interferometer mit durchgehenden Streifenwellenleitern angestrebt. Dadurch entfällt jedoch die akustooptische Braggablenkung zur räumlichen Trennung der Seitenbänder. Auf der Grundlage des elektrooptischen Effekts läßt sich im Streifenwellenleiter eine Phasenmodulation realisieren. Bei genau definierter elektrischer Ansteuerung des Modulators kann eine Seitenbandunterdrückung erreicht werden. So beschreibt VOGES u. a. in IEEE Journ. Quant. Electr. QE-18 (1982), S. 124-129 eine definierte elektrische Ansteuerung des Modulators durch Sägezahnimpulse mit definiertem Rücklauf und erreicht damit eine Seitenbandunterdrückung von 40dB. Die Erzeugung solcher Ansteuersignale ist jedoch aufwendig und erfordert sehr hohen Regelaufwand.

Der Erfindung liegt die Aufgabe zugrunde, ein phasenmoduliertes Interferometer zu realisieren, das ohne komplizierte Ansteuerung des Phasenmodulators zu auswertefähigen Überlagerungssignalen aus Meß- und Referenzarm des Interferometers gelangt.

Erfindungsgemäß wird die Aufgabe bei einem phasenmodulierten Interferometer mit einem Meßarm und einem Referenzarm, in dem in einem der beiden Interferometerarme ein Phasenmodulator zur Phasenmodulation der optischen Strahlung angeordnet ist und in dem ein Detektor zur Aufnahme eines optischen Überlagerungssignales aus Meß- und Referenzarm vorhanden ist, wobei dem Detektor eine Auswerteelektronik zur Bestimmung der Phasenverschiebung des Signals nachgeordnet ist, dadurch gelöst, daß am Phasenmodulator zwei sinusförmige Ansteuersignale mit unterschiedlichen Modulationsfrequenzen und Amplituden anliegen, die phasen- und frequenzstarr gekoppelt sind, und dem Detektor ein Bandpaßfilter nachgeordnet ist, das aus dem Frequenzspektrum des Überlagerungssignales eine Filterfrequenz ausfiltert, die der Bedingung

$$\omega_F = (2m-1)\omega_1 = 2n\omega_2$$

mit $m, n = 1, 2, 3\ldots$
und $\omega_1 > \omega_2$
genügt, so daß bei geeigneter Wahl eines von den Amplituden abhängigen Arbeitspunktes ein Signal der Struktur

$$S = \text{const} \cdot \cos(\omega_F t - kx)$$

entsteht, das mit üblichen Verfahren zur Bestimmung der Phasenverschiebung ausgewertet wird und bei dem t die Zeit, k die Wellenzahl und x die zu messenden Distanz bedeuten.

Vorteilhaft wird der Phasenmodulator so eingestellt, daß die Amplituden der Ansteuersignale die Gleichung $J_o(2\varphi_2) J_{2n}(2\varphi_2) = J_o(2\varphi_1) J_{2m-1}(2\varphi_1)$ erfüllen, wobei $J_i$ die i-te Besselfunktion ist. Dabei sind m und n positive ganze Zahlen, so daß in der Gleichung einerseits gerade und andererseits ungerade Indizes der Besselfunktion stehen. Zweckmäßig werden aus dem Überlagerungssignal ein oder mehrere Signale unterschiedlicher Frequenzen zur Regelung der Ansteuersignale ausgefiltert.

In einem dreiarmigen Interferometer, das zur Kompensation von Wellenlängendriften zwei Referenzarme aufweist, ist es von Vorteil, in jedem der Referenzarme einen Phasenmodulator anzuordnen, so daß in jedem Referenzarm jeweils nur eine der zwei unterschiedlichen sinusförmigen Ansteuersignale aufinoduliert wird.

Für ein dreiarmiges Interferometer mit zwei Meßarmen, vorzugsweise zur Erreichung einer Wegmessung in zwei Koordinatenrichtungen, erweist es sich als vorteilhaft, in jedem der Meßarme einen Phasenmodulator anzuordnen, wobei wiederum jedem dieser Modulatoren die zwei unterschiedlichen Modulationsfrequenzen zugeführt werden.

Insbesondere bei den dreiarmigen Interferometern ist es von Vorteil, sowohl die Strahlteilung in Meß- und Referenzarme und deren Rekombination als auch die Realisierung der elektrooptischen Phasenmodulatoren integriert-optisch auszuführen.

Für bestimmte Anwendungen erweist es sich als vorteilhaft, den oder die Phasenmodulatoren mit mehr als zwei sinusförmigen Ansteuersignalen anzusteuern.

Der Grundgedanke der Erfindung liegt in der Überlegung, mit einer einfachen Sinusansteuerung des Phasenmodulators eine Signal struktur des Überlagerungssignals aus Meß- und Referenzarmsignal zu erreichen, die sich in bekannter Weise bezüglich Phasenverschiebungen im Meßarm auswerten läßt. Dies wird gemäß der Erfindung erreicht, indem eine Modulation mit zwei phasengekoppelten frequenzstabilen Sinussignalen erfolgt und aus dem Überlagerungssignal schmalbandig eine Frequenz ausgefiltert wird, die sowohl einer ungeradzahligen Harmonischen der ersten Modulationsfrequenz als auch einer geradzahligen Harmonischen der zweiten Modulationsfrequenz entspricht. Mit der Wahl eines geeigneten Arbeitspunktes des Phasenmodulators entsteht im Ergebnis der Filterung ein in üblicher Weise auf Phasenverschiebung analysierbares Kosinussignal.

Mit dem erfindungsgemäßen phasenmodulierten Interferometer ist es möglich, anstelle der komplizierten Sägezahnansteuerung mit einer zweifachen Sinusansteuerung zu derselben Signalstruktur zu gelangen, die die Auswertung der Phasenverschiebung und damit die gewünschte Wegmessung erlaubt. Die simple Sinusansteuerung bringt zudem noch den Vorteil, daß sich entsprechende elektrooptische Modulatoren auf integriert-optischen Chips (IOC) realisieren lassen und somit ein integriert-optisches phasenmoduliertes Interferometer, insbesondere Heterodyninterferometer, für verschiedene technische Anwendungen industriell herstellbar ist.

Die Erfindung soll nachstehend anhand eines Ausführungsbeispieles näher erläutert werden. Die Zeichnungen zeigen:

Fig. 1    ein Blockschaltbild der erfindungsgemäßen Anordnung

Fig.2    eine Gestaltungsform eines dreiarmigen Interferometers als integriert-optisches Doppelinterferometer zur Kompensation von Wellenlängendriften bei der Wegmessung

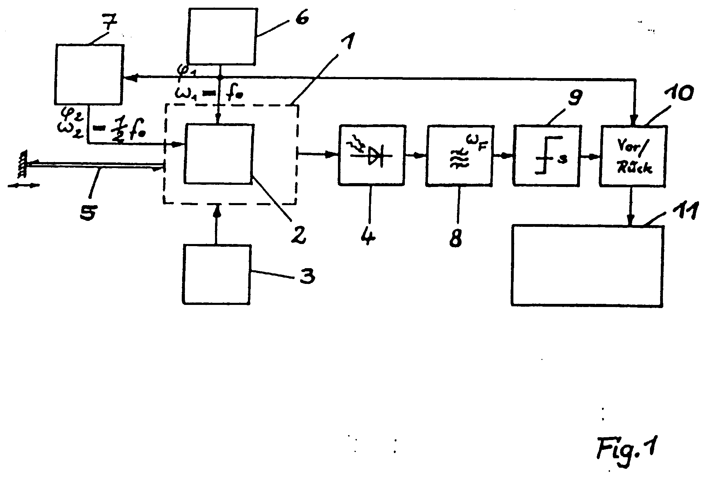

Das erfindungsgemäße Interferometer besteht - wie in Fig. 1 dargestellt - aus einer Interferometeranordnung, die vorzugsweise als integriert-optischer Chip 1 ausgeführt ist und in einem ihrer Interferometerarme einen Phasenmodulator 2 enthält. Die Interferometeranordnung ist üblicherweise mit einer Laserquelle, vorzugsweise in Form einer Laserdiode 3, einem Detektor 4 und einer den Meßarm des Interferometer bestimmenden Meßstrecke 5 gekoppelt. Gemäß der Erfindung wird der Phasenmodulator 2 mit zwei Ansteuersignalen mit den Modulationsfrequenzen $\omega_1$ und $\omega_2$ angesteuert. Das aus Meßarm und Referenzarm vereinigte Überlagerungssignal enthält Grund- und Oberwellen beider Modulationsfrequenzen $\omega_1$ und $\omega_2$, von denen gemäß der Erfindung ein Signal mit der Filterfrequenz $\omega_F$ vom Bandpaßfilter 8 ausgefiltert, in einem Komparator 9 einem Schwellenkriterium unterworfen, in einem Richtungsdiskriminator 10 gegenüber der Richtung der Phasenverschiebung untersucht und in einem Auswerterechner 11 betragsmäßig ausgewertet wird. Dazu erfolgt die Vorgabe der notwendigerweise frequenz- und phasenstarr gekoppelten Ansteuersignale mit den Modulationsfrequenzen $\omega_1$ und $\omega_2$ zweckmäßig mittels eines Generators 6, dessen Grundfrequenz $f_o$ über einen Frequenzteiler 7 geteilt wird. Am einfachsten wird die Grundfrequenz $f_o$ über den Frequenzteiler 7 halbiert, so daß die Modulationsfrequenzen $\omega_1 = f_o$ und $\omega_2 = \frac{1}{2} f_o$ entstehen und der Phasenmodulator 2 mit den Ansteuersignalen $S_1$ und $S_2$

$$S_1(t) + S_2(t) = \varphi_1 \sin(f_o t) + \varphi_2 \sin(\tfrac{1}{2}f_o t)$$

angesteuert wird. Dabei sind $\varphi_1$ und $\varphi_2$ die Amplituden der Ansteuersignalkomponenten.

Arbeitet man mit einer Grundfrequenz $f_o = 10$ MHz des Generators 6 und filtert das Empfängersignal bei dieser Frequenz $\omega_F = 10$ MHz, erhält man die zweite Harmonische des Ansteuersignals $S2 = \varphi_2 \sin(\tfrac{1}{2}f_o t)$ und die erste Harmonische des Ansteuersignals $S_1 = \varphi_1 \sin(f_o t)$.

Mit der Auswahl des geeigneten Arbeitspunktes des Phasenmodulators bei

$$J_o(2\varphi_1) J_1(2\varphi_1) = J_o(2\varphi_2) = J_2(2\varphi_2)$$

entsteht dann ein Signal

$$S(t) = \text{const} \cos(f_o t - kx),$$

aus dem in bekannter Weise die Bestimmung der Phasenverschiebung gegenüber der Grundfrequenz $f_o$ erfolgen kann. Um die allgemeine Bedingung für die Wahl der Filterfrequenz $\omega_F$ deutlich zu machen, sei noch ein zweites Beispiel für die Frequenzwahl angefügt. Steuert man den Phasenmodulator 2 mit den Modulationsfrequenzen $\omega_1 = 10$ MHz und

$\omega_2 = 7{,}5$ MHz an, erreicht man (entsprechend der im Anspruch 1 angegebenen Formel für die Filterfrequenz $\omega_F$ ) bei $\omega_F = 30$ MHz die Ausfilterung der 3. Harmonischen vom Ansteuersignal $S_1$ und der 4. Harmonischen des Ansteuersignals $S_2$, so daß sich mit dem Arbeitspunkt

$$J_o(2\,\varphi_1)\,J_3(2\,\varphi_1) = J_o(2\,\varphi_2)J_4\,(2\,\varphi_2)$$

das oben angegebene, auswertbare Kosinussignal ergibt. Bei einem Arbeitspunkt von $2\,\varphi_1 = 3{,}06$ und $2\,\varphi_2 = 4{,}27$ führen außerdem Schwankungen der Amplituden $\varphi_1$ und $\varphi_2$ nur zu minimalen Signaländerungen, weil

$$\left.\frac{d\,J_3\,(\,2\varphi)}{d\varphi}\right|_{\varphi\,=\,1{,}53} \approx \left.\frac{d\,J_4\,(2\varphi)}{d\varphi}\right|_{\varphi\,=\,2.135} \ll 1$$

gilt.

Die Wahl der Modulationsfrequenzen $\omega_1$ und $\omega_2$ ist prinzipiell beliebig, solange die Filterfrequenz $\omega_F$ der angegebenen Bedingung genügt. Wegen der Signalabschwächung der höheren Harmonischen ist es jedoch zweckmäßig, den Fall $\omega_1 = f_o$, $\omega_2 = \frac{1}{2}\,f_o$ und $\omega_F = f_o$ zu bevorzugen. Er wurde deshalb in die bildliche Darstellung von Fig. 1 aufgenommen, soll jedoch die Allgemeinheit der hier offenbarten erfindungsgemäßen Lehre in keiner Weise einschränken.

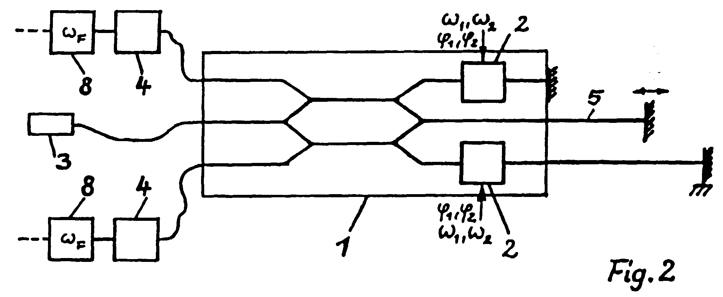

In Fig. 2 ist ein integriert-optischer Chip 1 für ein dreiarmiges Interferometer mit zwei Referenzarmen dargestellt. Sind die Meß- und Referenzarme - wie dort schematisch angedeutet - in der Folge Referenzarm - Meßarm - Referenzarm angeordnet und bewegt sich der Meßspiegel im Intervall zwischen den beiden Referenzspiegelpositionen, so läßt sich damit eine Wegmessung von Wellenlängendriften der Laserdiode 3 und Änderungen der optischen Eigenschaften entlang der Meßstrecke 5 unabhängig machen. Genau genommen, ist dieses Dreiarminterferometer ein Doppelinterferometer mit gemeinsamer Laserdiode 3 und gemeinsamer Meßstrecke 5, denn in jedem Teilinterferometer ist eine erfindungsgemäße Anregung des Phasenmodulators 2 mit zwei Modulationsfrequenzen $\omega_1$ und $\omega_2$ erforderlich, um die jeweilige Phasenverschiebung zwischen dem Meßarm und einem Referenzarm über den Detektor 4 und das Bandpaßfilter 8 gemäß Fig. 1 und dem Stand der Technik zu bestimmen.

Dabei müssen die Modulationsfrequenzen $\omega_1$ und $\omega_2$ für die beiden Phasenmodulatoren 2 nicht notwendigerweise identisch gewählt werden. Denkbar ist auch der Einsatz eines einzigen Phasenmodulators 2 im Meßarm vor Beginn der Meßstrecke 5.

Ein (nicht dargestelltes) dreiarmiges Interferometer mit zwei Meßarmen, vorzugsweise zur gekoppelten Zwei-Koordinaten-Wegmessung, ist prinzipiell analog dem Interferometer gemäß Fig. 2 aufgebaut, wobei dann der Referenzarm mittig auf dem Chip 1 liegt. Die Einstufung als Doppelinterferometer mit separater Überlagerung und Auswertung bleibt in gleicher Weise bestehen.

**Patentansprüche**

1. Phasenmoduliertes Interferometer mit einem Meßarm und einem Referenzarm, in dem in einem der beiden Interferometerarme ein Phasenmodulator zur Phasenmodulation der optischen Strahlung angeordnet ist und in dem ein Detektor zur Aufnahme eines optischen Überlagerungssignales aus Meß- und Referenzarm vorhanden ist, wobei dem Detektor eine Auswerteelektronik zur Bestimmung der Phasenverschiebung des Signals nachgeordnet ist, dadurch gekennzeichnet, daß

   - am Phasenmodulator (2) zwei sinusförmige Ansteuersignale mit unterschiedlichen Modulationsfrequenzen ($\omega_1$, $\omega_2$) und Amplituden ($\varphi_1, \varphi_2$) anliegen, die phasen,- und frequenzstarr gekoppelt sind,

   und

   - dem Detektor (4) ein Bandpaßfilter (8) nachgeordnet ist, das aus dem Frequenzspektrum des Überlagerungssignales eine Filterfrequenz ($\omega_F$) ausfiltert, die der Bedingung

$$\omega_F = (\,2m\,-1)\,\omega_1 = 2n\,\omega_2$$

mit m,n = 1,2,3...

und $\omega_1 > \omega_2$

genügt, so daß bei geeigneter Wahl eines von den Amplituden ($\varphi_1,\varphi_2$) abhängigen Arbeitspunktes ein Signal der Struktur

$$S = const \cdot \cos (\omega_F t - kx)$$

entsteht, das mit üblichen Verfahren zur Bestimmung der Phasenverschiebung ausgewertet wird und bei dem t die Zeit, k die Wellenzahl und x die zu messende Distanz bedeuten.

2. Anordnung nach Anspruch 1, dadurch gekennzeichnet,
daß der Phasenmodulator (2) so eingestellt ist, daß die Amplituden ($\varphi_1,\varphi_2$) der Ansteuersignale die Gleichung

$$J_o (2 \varphi_2) J_{2n} (2 \varphi_2) = J_o (2 \varphi_1) J_{2m-1} (2 \varphi_1)$$

mit m, n = 1,2,3...
erfüllen, wobei die $J_i$ die i-te Besselfunktion ist.

3. Anordnung nach Anspruch 2, dadurch gekennzeichnet,
daß aus dem Frequenzspektrum des Überlagerungssignales ein oder mehrere Signale unterschiedlicher Frequenzen zur Regelung der Amplituden ($\varphi_1,\varphi_2$) der Ansteuersignale ausgefiltert werden.

4. Anordnung nach Anspruch 1, dadurch gekennzeichnet,
daß in einem dreiarmigen Interferometer, bei dem vorzugsweise zur Kompensation von Wellenlängendriften der Laserquelle zwei Referenzarme vorhanden sind, die beide durch Überlagerung mit demselben Meßarm zwei separat auszuwertende Überlagerungssignale hervorbringen, in jedem der Referenzarme ein Phasenmodulator (2) angeordnet ist, wobei an jedem dieser Phasenmodulatoren (2) nicht notwendigerweise dieselben, jedoch jeweils zwei frequenz- und phasenstarr gekoppelte Ansteuersignale mit den Modulationsfrequenzen ($\omega_1, \omega_2$) anliegen.

5. Anordnung nach Anspruch 1, dadurch gekennzeichnet,
daß in einem dreiarmigen Interferometer, bei dem vorzugsweise zur Erreichung einer Zwei-Koordinaten-Wegmessung zwei Meßarme vorhanden sind, die beide mit demselben Referenzarm zwei separat auszuwertende Übergangssignale hervorbringen, im Referenzarm ein Phasenmodulator (2) angeordnet ist, dem beide Modulationsfrequenzen ($\omega_1, \omega_2$) als Ansteuersignale zugeführt werden.

6. Anordnung nach Anspruch 4 oder 5, dadurch gekennzeichnet,
daß sowohl die Aufspaltung in Meß- und Referenzarme und deren Überlagerung, als auch die Realisierung der elektrooptischen Phasenmodulatoren (2) integriertoptisch ausgeführt ist.

7. Anordnung nach Anspruch 1, dadurch gekennzeichnet,
daß der oder die Phasenmodulatoren (2) eine Ansteuerung mit mehr als zwei sinusförmigen Ansteuersignalen aufweisen.

**Claims**

1. A phase-modulated interferometer having a measuring arm and a reference arm, in which a phase modulator for phase modulation of the optical radiation is disposed in one of the two interferometer arms, and in which a detector is provided to detect an optical heterodyne signal from the measuring and reference arm, the detector being followed by an electronic evaluator for determining the phase shift of the signal, characterised in that:
two sinusoidal trigger signals having different modulation frequencies ($\omega_1,\omega_2$) and amplitudes ($\varphi_1,\varphi_2$) are present at the phase modulator (2), said signals being in locked phase and frequency relationship,
and
the detector (4) is followed by a band-pass filter (8), which filters out of the frequency spectrum of the heterodyne signal a filter frequency ($\omega_F$) which satisfies the condition

$$(\omega_F) = (2m-1)\omega_1 = 2n\ \omega_2$$

where m,n = 1,2,3...
and $\omega_1 > \omega_2$,
so that given suitable choice of a working point dependent upon the amplitudes $(\varphi_1, \varphi_2)$ a signal of the structure S = const.cos $(\omega_F t - kx)$ is obtained, which is evaluated by conventional methods of determining the phase shift, and wherein t equals the time, k the wave number and x the distance for measurement.

2. An arrangement according to claim 1, characterised in that the phase modulator (2) is so adjusted that the amplitudes $(\varphi_1, \varphi_2)$ of the trigger signals satisfy the equation

$$J_o(2\varphi_2)J_{2n}(2\varphi_2) = J_o(2\varphi_1)J_{2m-1}(2\varphi_1)$$

where m,n = 1,2,3...
$J_i$ being the $i^{th}$ Bessel function.

3. An arrangement according to claim 2, characterised in that one or more signals of different frequencies are filtered out of the frequency spectrum of the heterodyne signal in order to control the amplitudes $(\varphi_1, \varphi_2)$ of the trigger signals.

4. An arrangement according to claim 1, characterised in that in a three-arm interferometer, in which, preferably to compensate wavelength drifts of the laser source, two reference arms are provided both of which produce by heterodyning with the same measuring arm two heterodyne signals for separate evaluation, a phase modulator (2) is disposed in each of the reference arms, there being present at each of these phase modulators (2) trigger signals at the modulation frequencies $(\omega_1, \omega_2)$, said signals not necessarily being the same but each being coupled in pairs in locked frequency and phase relationship.

5. An arrangment according to claim 1, characterised in that in a three-arm interferometer, in which two measuring arms are provided, preferably in order to obtain a two-coordinate distance measurement, said two measuring arms both producing with the same reference arm two heterodyne signals for separate evaluation, a phase modulator (2) is disposed in the reference arm and both modulation frequencies $(\omega_1, \omega_2)$ are fed to said phase modulator as trigger signals.

6. An arrangment according to claim 4 or 5, characterised in that both the division into measuring and reference arms and their heterodyning, and also the provision of the electro-optical phase modulators (2) are embodied in integrated optical form.

7. An arrangement according to claim 1, characterised in that the phase modulator or modulators (2) are triggered by more than two sinusoidal trigger signals.

**Revendications**

1. Interféromètre à modulation de phase comportant un bras de mesure et un bras de référence, dans lequel dans l'un des deux bras d'interféromètre est disposé un modulateur de phase destiné à moduler la phase du rayonnement optique et dans lequel est prévu un détecteur, destiné à capter un signal de superposition optique venant des bras de mesure et de référence, une électronique d'exploitation étant disposée en aval afin de déterminer le déphasage entre les signaux, caractérisé en ce que

- sur le modulateur de phase (2) sont appliqués deux signaux de commande sinusoïdaux ayant des fréquences de modulation $(\omega_1, \omega_2)$ et des amplitudes $(\varphi 1, \varphi 2)$ différentes, couplés rigidement en phase et en fréquence,

et

- en aval du détecteur (4) est branché un filtre passe-bande (8), éliminant par filtrage une fréquence de filtrage $(\omega_F)$, à partir du spectre de fréquence du signal de superposition, cette fréquence satisfaisant à la condition

$$\omega_F = (2m-1) \, \omega_1 = 2n\omega_2$$

avec m,n = 1,2,3...
et $\omega_1 > \omega_2$
de manière que, pour un choix approprié d'un point de travail dépendant des amplitudes ($\varphi_1$, $\varphi_2$), soit produit un signal de structure

$$S = const.cos \, (\omega_F \, t - kx)$$

qui est exploité par des procédés usuels, pour déterminer le déphasage, et pour lequel t est le temps, k est le nombre d'ondes et x la distance à mesurer.

2.  Dispositif selon la revendication 1, caractérisé en ce que le modulateur de phase (2) est réglé de manière que les amplitudes ($\varphi_1$, $\varphi_2$) des signaux de commande satisfassent à l'égalité

$$J_o(2\varphi_2)J_{2n}(2\varphi_2) = J_o(2\varphi_1) \, J_{2m-1}(2\varphi_1)$$

avec m,n = 1,2,3...
$J_i$ étant la fonction de Bessel d'ordre i.

3.  Dispositif selon la revendication 2, caractérisé en ce qu'un ou plusieurs signaux ayant des fréquences différentes sont séparés par filtrage pour assurer la régulation des amplitudes ($\varphi_1$, $\varphi_2$) des signaux de commande, en opérant à partir du spectre de fréquence du signal de transition.

4.  Dispositif selon la revendication 1, caractérisé en ce que, dans un interféromètre à trois bras pour lequel, de préférence, il y a deux bras de référence pour assurer la compensation des dérives en longueur d'onde de la source laser, bras de référence produisant les deux, par superposition avec le même bras de mesure, deux signaux de superposition à évaluer séparément, est disposé dans chacun des bras de référence un modulateur de phase (2), sur chacun de ces modulateurs de phase (2) étant appliqués des signaux de commande de fréquences de modulation ($\omega_1$, $\omega_2$), ces signaux n'étant pas nécessairement les mêmes mais étant cependant respectivement couplés, par deux, rigidement en fréquence et en phase.

5.  Dispositif selon la revendication 1, caractérisé en ce que, dans un interféromètre à trois bras, dans lequel pour obtenir une mesure de distance à deux coordonnées sont prévus, de préférence, deux bras de mesure, les deux bras de mesure donnant, avec le même signal de référence, deux signaux de transition à évaluer séparément, un modulateur de phase (2) est disposé dans le bras de référence un modulateur de phase auquel à titre de signaux de commande sont amenées les deux fréquences de modulation ($\omega_1$, $\omega_2$).

6.  Dispositif selon la revendication 4 ou 5, caractérisé en ce que, tant la dissociation en des bras de mesure et en bras de référence et leur superposition, qu'également la réalisation des modulateurs de phase (2) électro-optiques sont réalisés de façon optiquement intégrée.

7.  Dispositif selon la revendication 1, caractérisé en ce que le ou les modulateurs de phase (2) présentent une commande comportant plus de deux signaux de commande sinusoïdaux.

$\varphi_1$

$\omega_1 = f_0$

$\varphi_2$

$\omega_2 = \frac{1}{2} f_0$

$\omega_F$

Vor/ Rück

Fig.1

Fig.2